(19) Europäisches Patentamt
European Patent Office
Office européen des brevets

(11) Veröffentlichungsnummer: **0 352 455 A1**

# (12) EUROPÄISCHE PATENTANMELDUNG

(21) Anmeldenummer: **89110551.2**

(22) Anmeldetag: **10.06.89**

(51) Int. Cl.⁴: **C08L 33/12 , //(C08L33/12, 51:00,83:04)**

(30) Priorität: **24.06.88 DE 3821337**

(43) Veröffentlichungstag der Anmeldung: **31.01.90 Patentblatt 90/05**

(84) Benannte Vertragsstaaten: **AT BE CH DE ES FR GB IT LI NL SE**

(71) Anmelder: **Röhm GmbH**
**Kirschenallee Postfach 4242**
**D-6100 Darmstadt 1(DE)**

(72) Erfinder: **Numrich, Uwe**
**Sudetenstrasse 1**
**D-6108 Weiterstadt(DE)**
Erfinder: **Fuchs, Wolfgang**
**Hauptstrasse 20**
**D-6146 Alsbach-Hähnlein 1(DE)**

## (54) Schlagzähe Polymethylmethacrylat-Formmasse.

(57) Die Erfindung betrifft die Verbesserung der Kerbschlagzähigkeit von schlagzähmodifizierten Polymethylmethacrylat-Formmassen durch Zusatz von 0,05 bis 5 Gew.-% eines Polyorganosiloxans.

EP 0 352 455 A1

## Gebiet der Erfindung

Die Erfindung betrifft schlagzähe Polymethylmethacrylat-Formmassen, insbesondere solche glasklare Formmassen, mit erhöhter Kerbschlagzähigkeit.

## Stand der Technik

Polymethylmethacrylat (PMMA) mit einer Molmasse Mw unter etwa 300 000, ist als Schmelze thermoplastisch verarbeitbar. Thermoplastisch verarbeitbare PMMA-Formmassen liegen mit ihren Molmassen bevorzugt im Bereich von 100 000 bis 200 000. PMMA-Kunststoffe zeichnen sich durch ihre hohe Klarheit und Transparenz, verbunden mit guter mechanischer Festigkeit und hervorragender Witterungsbeständigkeit aus. Dadurch haben sie als organische Gläser, als sogenannte Acrylgläser, weite technische Anwendungen erlangt.

Da PMMA und die insbesondere aus technologischen und anwendungstechnischen Gründen etwas, aber wenig modifizierten Acrylgläser zu den spröden Kunststoffen zählen, und damit unbefriedigende Schlagzähigkeiten besitzen, wurden Kunststoffe auf PMMA-Basis entwickelt, die sich durch deutlich höhere Zähigkeiten auszeichnen, ohne dadurch eine wesentliche Beeinträchtigung der typischen PMMA-Eigenschaften zu erleiden.

Schlagzähmodifizierte Polymerisate sind im allgemeinen Mehrphasenwerkstoffe, die mindestens eine Hart- und eine Zähphase aufweisen. Hohe Zähigkeiten werden beispielsweise erzielt durch Co- bzw. Pfropfpolymerisation von Methylmethacrylat, Styrol und Acrylestern bei Gegenwart von bzw. auf Polybutadien. Die Technik bedient sich hier insbesondere der Emulsionspolymerisation zur Herstellung solcher schlagzäher Formmassen (EP-B 0 033 365 = U.S. 4 308 354).

Eine wesentlich bessere Witterungsbeständigkeit als die im wesentlichen Polybutadien als Zähphase enthaltenden PMMA-Formmassen besitzen die Acrylgläser, deren Zähphase auf der Basis von Acrylelastomeren, insbesondere von Polybutylacrylat, aufgebaut ist. Solche Formmassen lassen sich durch Abmischen der Zäh- mit der Hartkomponente, wie z.B. der normalen PMMA-Formmasse, herstellen. Durch besondere Polymerisationsverfahren, beispielsweise einem zweistufigen Suspensions-Polymerisationsverfahren, wie es in der DE-A 33 29 765 (= US 4 521 567) beschrieben ist, wird ein Polymerisat erzeugt, das vorteilhaft einen möglichst großen Anteil der Polybutylacrylat-Zähphase enthält. Dieses Polymerisat weist eine hohe, gegebenenfalls nicht meßbare Schlagzähigkeit, verbunden auch mit hoher Kerbschlagzähigkeit auf. Seine Wärmeformbeständigkeit ist jedoch wegen des hohen Anteils an Butylacrylatelastomerem, das als Homopolymerisat eine Tg < 25 Grad C besitzt, sehr niedrig.

Durch Abmischen mit einer thermoplastisch verarbeitbaren PMMA-Formmasse wird der gewünschte Gehalt an Zähphase und damit die Eigenschaften, u.a. thermische und mechanische Eigenschaften, der schlagzähmodifizierten PMMA-Formmasse eingestellt.

Schlagzähmodifizierte PMMA-Formmassen werden nach EP-B 0 113 924 (= US 4 513 118) auch durch Abmischen von thermoplastischen Formmassen auf Basis von Methylmethacrylat mit Schlagzähmodifizierungmitteln erhalten. Diese Schlagzähmodifizierungsmittel stellen mehrstufige Emulsionspolymerisate mit einer Acrylatzähphase dar, die in Gegenwart von mehrfunktionellen, d.h. drei- oder mehrfunktionellen Acryl- bzw. Methacrylverbindungen durch Polymerisation hergestellt werden (s. dazu Kunststoff-Handbuch, Band IX, Carl Hanser Verlag München, 1975, Seiten 161 bis 165).

Reines PMMA und wenig modifizierte PMMA-Formmasse weisen Schlagzähigkeiten von etwa 12 kJ/m$^2$ bis etwa 20 kJ/m$^2$ auf (Kunststoff-Handbuch loc.cit. Seite 58; Winnacker-Küchler, Chemische Technologie, Band 6, Organische Technologie II, 4. Auflage, Carl Hanser Verlag München Wien 1982, Seite 416).

Nach den angegebenen Methoden erhaltenes schlagzähmodifiziertes PMMA weist dagegen Schlagzähigkeiten von etwa 40 bis etwa 90 kJ/m$^2$ auf (s. DE-A 33 29 765).

Eine wesentliche mechanische Werkstoffeigenschaft wird als Kerbschlagzähigkeit bezeichnet. Werte dieser Eigenschaft geben Auskunft darüber, inwieweit Stellen eines Konstruktionsteils, an denen eine Spannung als Folge von Kerben, die in der Praxis beispielsweise Bohrungen, Keilnuten, Bearbeitungsriefen u.ä. darstellen können, auftritt, als Ausgangsstellen für einen Dauerbruch prädestiniert sind. Je höher die gemessenen Kerbschlagzähigkeitswerte eines Werkstoffes, wie beispielsweise einer PMMA-Formmasse, liegen, um so geringer ist eine Bruchwahrscheinlichkeit an geschädigten Stellen bei mechanischer Beanspruchung, insbesondere bei höheren Einwirkungsgeschwindigkeiten, wie beim Schlag.

Durch die Methoden zur Schlagzähverbesserung von PMMA-Formmassen wird auch die Kerbschlagzähigkeit, die bei reinem PMMA bei 2 kJ/m$^2$ (l.c. Winnacker-Küchler, Seite 416) und bei technischen PMMA-Formmassen bei 1,5 kJ/$m^2$ liegt, auf Werte von etwa 2,5 kJ/$m^2$ verbessert.

Verbesserungen der Kerbschlagzähigkeit bzw. der Schlagzähigkeit von Butadienpolymer- oder Butadiencopolymer-haltigen thermoplastischen Formkörpern aus ABS-Kunststoffen oder solchen durch Pfropfung der Zähphase mit Methylmethacrylat, Styrol und Acrylnitril hergestellten Polymeren, durch Zusatz von etwa 0,05 bis etwa 3 Gew.-% Silicium-Verbindungen, den Polyorganosiloxanen, sind aus den deutschen Offenlegungsschriften DE-OS 28 37 597, DE-OS 28 27 594 und DE-OS 20 39 022 bekannt.

Auch durch Zusatz von mit gleichen, das thermoplastische Polymerisat bildenden, Monomeren gepfropften Silicon-Elastomere zu thermoplastischen Polymerisaten, wie z.B. zu Polystyrol, Polymethylmethacrylat, oder Copolymerisaten von Styrol und/oder Methylmethacrylat und gegebenenfalls Acrylnitril, werden, wie z.B. in U.S. 3 345 321 und U.S. 3 879 491 beschrieben, zähe, thermoplastische Polymerzusammensetzungen erhalten.

In der DE-OS 14 95 298 wird ein Verfahren zur Herstellung von Kunststoffen mit verbesserten mechanischen und physikalischen Eigenschaften durch Polymerisation von Estern der Methacrylsäure oder Acrylsäure, von Styrol oder Divinylbenzol in Gegenwart von 0,1 bis 5 Gew.-% Methylpolysiloxanen beschrieben. Die angegebenen Schlagzähigkeiten von ca. 10 bis 20,5 cm kp/$cm^2$ (entspricht der Einheit kJ/$m^2$) der erhaltenen PMMA-Massen heben sich nicht von dem oben angegebenen Stand der Technik für Polymethylmethacrylat ab.

## Aufgabe und Lösung

Die bisher erzielten Verbesserungen der Kerbschlagzähigkeiten von PMMA-Formmassen durch Schlagzähmodifizierungen, unter weitgehendem Erhalt der ansonsten typischen PMMA-Eigenschaften, sind, wie aus den oben angegebenen Werten hervorgeht, relativ gering und befriedigen die in diese Formmassen gesetzten und weiter wachsenden Qualitätsansprüche noch keineswegs. Verbesserungen der Kerbschlagzähigkeiten von schlagzähmodifizierten PMMA-Formmassen sind erforderlich.

Es wurde gefunden, daß bei thermoplastischen Formmassen, die aus einer Hartphase, die im wesentlichen ein PMMA darstellt, d.h. ein Polymerisat, das durch Polymerisation mit > 90 Gew.-% Methylmethacrylat erhalten wird, und einer Zähphase bestehen, und welche als schlagzähmodifizierte PMMA-Formmassen bekannt sind, durch Einverleiben von geringen Mengen organischer Silicium-Verbindungen eine deutliche Verbesserung der Kerbschlagzähigkeit erreicht wird, ohne daß die typischen Eigenschaften der schlagzähen PMMA-Formmassen merklich verändert werden. Es wurde weiter gefunden, daß sich die neuen Zusammensetzungen mit den verbesserten mechanischen Eigenschaften durch zwar intensives, aber einfaches Vermischen der bekannten schlagzähmodifizierten PMMA-Formmassen und der organischen Siliciumverbindung herstellen lassen.

Die Erfindung betrifft:

Schlagzähmodifizierte Polymethylmethacrylat-Formmassen mit verbesserter Kerbschlagzähigkeit, gekennzeichnet durch einen Gehalt von

I) 95 bis 99,95 Gew.-% schlagzähmodifiziertem Polymethylmethacrylat und

II) 0,05 bis 5 Gew.-% eines Polyorganosiloxans.

Diese erfindungsgemäßen Formmassen werden vorzugsweise erhalten durch:

Verfahren zur Herstellung von schlagzähmodifizierten Polymethylmethacrylat-Formmassen mit verbesserter Kerbschlagzähigkeit, dadurch gekennzeichnet, daß

I) 95 bis 99,95 Gew.-% schlagzähmodifiziertes Polymethylmethacrylat und

II) 0,05 bis 5 Gew.-% eines Polyorganosiloxans innig miteinander vermischt werden.

## Durchführung der Erfindung

Die Komponenten der neuen Formmasse sind:

### I. Schlagzähmodifizierte PMMA-Formmassen.

Diese thermoplastisch verarbeitbaren Formmassen I bestehen aus:

a) mindestens einer harten, nichtelastomeren Phase, wobei diese Hartphase aus mindestens 50 Gew.-% thermoplastisch verarbeitbarem Polymethylmethacrylat bzw. aus einem thermoplastisch verarbeitbarem Copolymerisat mit mindestens 50 Gew.-% copolymerisierten Methylmethacrylat-Monomereinheiten,

besteht, und

b) mindestens einer Elastomerphase, durch welche eine typische Eigenschaft der Acrylgläser, nämlich die wasserklare Transparenz, nicht verändert werden soll, durch welche jedoch mechanische Eigenschaften, insbesondere deren Schlagzähigkeit, so verändert werden, daß die Polymethylmethacrylat-Formmasse weniger spröde wird und dadurch Anwendungen zugänglich gemacht werden kann, die zähere Werkstoffe bedingen.

Als Elastomerphasen b), werden polymere Produkte, wie z.B. EPDM- und Polybutadien-Kautschuke oder Zähphasen auf der Basis von Acrylelastomeren, z.B. Polybutylacrylat oder Copolymere von Butylacrylat, zum Aufbau der schlagzähmodifizierten Massen I verwendet.

Der Anteil der Elastomeren b) in den schlagzähmodifizierten PMMA-Formmassen I kann wenige Gewichtsprozente, z.B. 3 bis 10 Gew.-% bis etwa 50 Gew.-% oder mehr betragen, und ist abhängig insbesondere von den einzustellenden optischen und mechanischen Eigenschaften. Die Herstellung schlagzähmodifizierter PMMA-Formmassen I kann durch Pfropfpolymerisation einer Thermoplastphase, wie z.B. bei einer Copolymerisation von Methylmethacrylat, Styrol, Methyl- und/oder Ethylacrylat auf eine Elastomerphase, wie einem Polybutadien-Festkautschuk, wie in EP 0 033 365 beschrieben, oder durch Abmischung von durch mehrstufige Emulsionspolymerisation von harten und elastomeren Stufen erhaltenen Schlagzähmodifizierungsmittel mit Polymethylmethacrylat-Formmassen, wie in der EP 0 113 924 beschrieben, vorgenommen werden. Auch durch Abmischen von Polymethylmethacrylat mit einer schlagzähen Formmasse, die ihrerseits durch zweistufige Substanzpolymerisation, insbesondere in Form einer Perlpolymerisation, hergestellt wird, lassen sich, wie in der DE-OS 33 29 765 beschrieben, schlagzähe Formmassen I herstellen.

So lassen sich eine Palette von Werkstoffen mit verschiedenen Zähigkeiten, Festigkeits- und Härtewerten erhalten. Schlagzähmodifizierte Polymethylmethacrylat-Formmassen I weisen bei guter Transparenz Schlagzähigkeiten > 20 kJ/m² bis ca. 100 kJ/m², insbesondere von etwa 40 kJ/m² bis etwa 80 kJ/m², gemessen nach DIN 53 453, auf.

II. Polyorganosiloxane

Erfindungsgemäß geeignete Polyorganosiloxane sind Polydialkylsiloxane, Polyarylalkylsiloxane, Polydiarylsiloxane der allgemeinen Formel:

$$R^1-O-\underset{R^2}{\overset{R^2}{\underset{|}{\overset{|}{Si}}}}-O\left[\underset{R^2}{\overset{R^2}{\underset{|}{\overset{|}{Si}}}}-O\right]_n-\underset{R^2}{\overset{R^2}{\underset{|}{\overset{|}{Si}}}}-O-R^1$$

vor allem mit $R^1$ = Alkyl, von $C_1$-$C_6$ und/oder Aryl, insbesondere Phenyl

$R^2$ = Alkyl-, Aryl-, Alkoxy- oder OH-Gruppe

n = 3 bis 150

Genannt seien als Polyalkylsiloxane, insbesondere Polydimethylsiloxane und als Polyarylsiloxane insbesondere, Polydiphenylsiloxane.

In der angegebenen allgemeinen Formel der Polyorganosiloxane können die Substituenten $R^1$ und/oder $R^2$ auch organofunktionelle Substituenten, z.B. Hydroxy- oder Aminoalkylengruppen, wie z.B. $HO\text{-}CH_2\text{-}$, $H_2N\text{-}CH_2\text{-}$, oder auch

$$HO-\underset{CH_3}{\underset{|}{CH}}-CH_2-O-,$$

sein, die ihrerseits über diese reaktionsfähigen Gruppen mit anderen organischen Molekülen, wie z.B. Isocyanten oder cyclischen Estern (Lactonen) umgesetzt werden können, wobei organisch modifizierte Polysiloxane, z.B. Urethan-modifizierte Polysiloxane oder Polyester-modifizierte Polysiloxane, erhalten werden.

In der DE-OS 28 37 597 sind Urethan-modifizierte Polysiloxane beschrieben, die als Zusätze in ABS-Formmassen deren Kerbschlagzähigkeit erhöhen. In der europäischen Patentanmeldung 0 217 364 sind

Polyestergruppen-haltige Polysiloxane beschrieben, die zur antiadhäsiven Ausrüstung und Gleitfähigkeitserhöhung von Lacken und Formmassen verwendet werden. Unter Formmassen werden dort solche verstanden, die als Reaktionsharze, z.B. ungesättigte Polyesterharze, während der Formgebung zur Reaktion gebracht werden. Als schrumpfreduzierende Anteile können den Reaktionsharzen Thermoplasten, wie z.B. Polymethylmethacrylat, beigemischt sein.

Zur erfindungsgemäßen Verbesserung der Kerbschlagzähigkeit von schlagzähen PMMA-Formmassen werden insbesondere Polyester-modifizierte Polysiloxane, wie beispielsweise das Handelsprodukt BYK® LP-X 5898, als Komponente II bevorzugt eingesetzt.

Die Polyorganosiloxane II werden der schlagzähen PMMA-Formmasse I vorzugsweise bei der Compoundierung, z.B. auf Schneckenextrudern, zugesetzt und dabei auf eine innige Vermischung von II in I geachtet. Gegebenenfalls kann das Polyorganosiloxan II auch schon während der Herstellung der schlagzähen Formmasse, z.B. bei deren Herstellung durch Polymerisation, oder bei deren Herstellung durch Vermischen des Schlagzähmodifizierungsmittels mit der thermoplastischen PMMA-Formmasse, zugesetzt werden.

Polyorganosiloxane in den angegebenen Mengen erhöhen die Kerbschlagzähigkeit der schlagzähen PMMA-Formmassen, ohne merkliche negative Beeinträchtigung der sonstigen physikalischen Eigenschaften. Neben der erfindungsgemäßen Kerbschlagzähigkeitserhöhung wirkt sich der Polyorganosiloxan-Zusatz auch günstig als Gleitmittel bei der Verarbeitung der Formmassen, z.B. beim Spritzgießen der Masse, aus und erleichtert die Entformung der Spritzlinge.

## BEISPIELE

### Beispiel 1

Eine schlagzähe, thermoplastisch verarbeitbare Polymethylmethacrylat-Formmasse, bestehend aus
15 Gew.-% Polybutadienkautschuk und
85 Gew.-% eines Polymerisates von Methylmethacrylat und Styrol im Gewichtsverhältnis 80 : 20, das auf den Kautschuk zumindest teilweise aufgepfropft ist,
wird auf dem Extruder mit 1 Gew.-% (bezogen auf die zähe Formmasse) BYK® LP-X 5898, einem Polyorganosiloxan, gemischt.

Die erhaltene Masse wird zu Probekörpern für die Prüfung der Kerbschlagzähigkeit nach ISO 180/1a bzw. ASTM D-256 spritzgegossen.

Aus den Prüfungen ergeben sich Erhöhungen der Kerbschlagzähigkeitswerte gegenüber der nicht Polysiloxan-modifizierten Probe um 10 %.

### Beispiel 2

Eine durch Perlpolymerisation hergestellte, thermoplastisch verarbeitbare, schlagzähe Polymethylmethacrylat-Formmasse, bestehend aus
20 Gew.-% eines vernetzten Copolymerisats aus 85 Gew.-Teilen Butylacrylat und 15 Gew.-Teilen Styrol und
80 Gew.-% teilweise auf der Zähphase aufgepfropftem, thermoplastisch verarbeitbarem PMMA,
wird wie in Beispiel 1 beschrieben, mit 1 Gew.-% des dort angegebenen Polyorganosiloxans verarbeitet und, wie dort weiter beschrieben, die Kerbschlagzähigkeiten gemessen. Die Erhöhungen der Kerbschlagzähigkeiten liegen gegenüber den nicht Polysiloxan-modifizierten Proben bei 50 %.

### Beispiel 3

Durch Emulsionspolymerisation hergestellte thermoplastisch verarbeitbare, schlagzähe Polymethylmethacrylat-Formmasse, bestehend aus
20 Gew.-% eines vernetzten Copolymerisats aus 85 Gew.-Teilen Butylacrylat und 15 Gew.-Teilen Styrol und
80 Gew.-% teilweise auf der Zähphase aufgepfropftem, thermoplastisch verarbeitbarem PMMA,
wird wie in Beispiel 1 beschrieben mit 1 Gew.-% des dort angegebenen Polyorganosiloxans verarbeitet und, wie dort weiter beschrieben, die Kerbschlagzähigkeiten gemessen. Die Erhöhungen der Kerbschlagzähigkeiten liegen gegenüber den nicht Polysiloxan-modifizierten Proben bei rund 10 %.

Beispiel 4

Polymerisat analog Beispiel 3 mit
10 Gew.-% des vernetzten Buylacrylat-Styrol-Copolymerisats und
90 Gew.-% des thermoplastisch verarbeitbaren PMMA mit 1 Gew.-% Polyorganosiloxan
ergibt bei den Messungen der Kerbschlagzähigkeiten, Erhöhungen derselben um 25 % gegenüber Polysiloxan-freien Proben.

Beispiel 5

Der im Beispiel 3 beschriebenen schlagzähen Polymethylmethacrylat-Formmasse werden verschiedene Mengen (0,5, 1 und 2 Gew.-% bez. auf die Formmasse) des in Beispiel 1 genannten Polysiloxans zugemischt und die Kerbschlagzähigkeiten der erhaltenen Mischungen gemessen. In der folgenden Abbildung I ist die Abhängigkeit der Kerbschlagzähigkeitswerte (SZ-Jzod in KJ/m$^2$ nach ISO 180/1a) vom Polysiloxan-Anteil graphisch wiedergegeben.

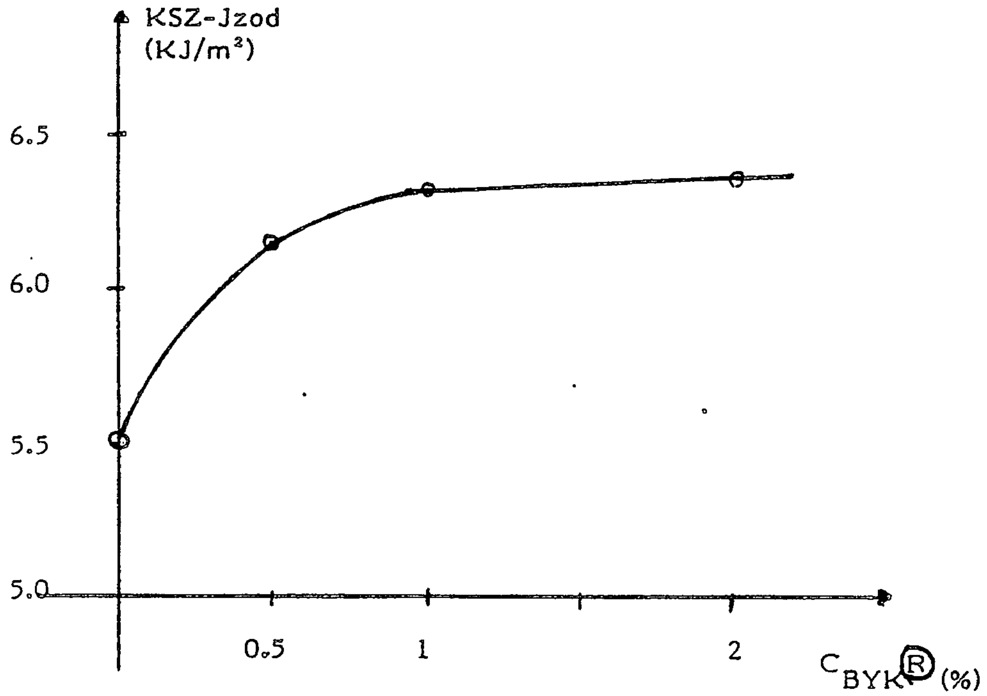


Abb. I

**Ansprüche**

1. Schlagzähmodifizierte Polymethylmethacrylat-Formmassen mit verbesserter Kerbschlagzähigkeit, gekennzeichnet durch einen Gehalt von

I) 95 bis 99,95 Gew.-% schlagzähmodifiziertem Polymethylmethacrylat und

II) 0,05 bis 5 Gew.-% eines Polyorganosiloxans.

2. Schlagzähmodifizierte Polymethylmethacrylat-Formmassen nach Anspruch 1, dadurch gekennzeichnet, daß das Polyorganosiloxan ein Polyester-modifiziertes Polyorganosiloxan ist.

3. Verfahren zur Herstellung von schlagzähmodifizierten Polymethylmethacrylat-Formmassen mit verbesserter Kerbschlagzähigkeit, dadurch gekennzeichnet, daß

I) 95 bis 99,95 Gew.-% schlagzähmodifiziertes Polymethylmethacrylat und

II) 0,05 bis 5 Gew.-% eines Polyorganosiloxans innig miteinander vermischt werden.

Europäisches Patentamt

# EUROPÄISCHER RECHERCHENBERICHT

Nummer der Anmeldung

EP 89 11 0551

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 656 212 (HOSODA et al.)<br>* Tabelle 3; Vergleichsbeispiel 4 *<br>--- | 1,3 | C 08 L 33/12 //<br>(C 08 L 33/12<br>C 08 L 51:00<br>C 08 L 83:04 ) |
| A | CENTRAL PATENTS INDEX, 16. März 1988, Sektion A, Woche 8803, Nr. 88-017957, London, GB; & JP-A-62 280 251 (JAPAN SYNTHETIC RUBBER) 05-12-1987<br>* Insgesamt *<br>----- | 1,3 | |
| | | | RECHERCHIERTE SACHGEBIETE (Int. Cl.4) |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 14-09-1989 | SCHUELER D.H.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)